# DEMANDE DE BREVET EUROPEEN

(11) **EP 0 947 411 A1**
(43) Date de publication de la demande: **06.10.1999**
(21) Numéro de dépôt: 99400814.2
(22) Date de dépôt: 02.04.1999
(51) Int. Cl.: B61L 25/02, G01C 22/02, G01P 3/64

(54) **Odomètre**

(30) Priorité: 02.04.1998 FR 9804108
(71) Demandeur: SAGEM SA, 75116 Paris (FR)
(72) Inventeur: Frayssines, Patrick, 60590 Villers sur Trie (FR); Manac'H, Stéphane, 78510 Triel sur Seine (FR); Laury, Jean-Marc, 78400 Chatou (FR)
(74) Mandataire: Bloch, Gérard

(57) **Abrégé**

L'odomètre, pour véhicule se déplaçant sur une voie comportant des discontinuités situées à intervalles déterminés, comporte un détecteur (11) de telles discontinuités commandant des moyens de traitement (12, 13) agencés pour compter le nombre des détections de discontinuité et en déduire, d'après l'intervalle entre discontinuités, des données relatives au déplacement du véhicule, émises par un émetteur radio (32).

## Description

La présente invention a pour origine le problème que pose la gestion du trafic des wagons de marchandises. En effet, ceux-ci se déplacent constamment et traversent les frontières, si bien qu'il est courant de perdre la trace de wagons pendant un certain temps.

Pour localiser un véhicule, il est connu d'y implanter un récepteur de radionavigation GPS, commandant un émetteur radio transmettant cycliquement la position relevée par le récepteur GPS.

On peut encore prévoir un système à gyroscope et odomètre qui, d'après le cap et la vitesse, corrige la position estimée du véhicule selon son déplacement.

Cependant, dans le cas du GPS, les signaux reçus des satellites GPS sont parfois atténués, par exemple lors de la traversée d'un tunnel ou le passage à proximité d'immeubles de grande taille. Bref, le service GPS n'est pas assuré en permanence. Pour masquer ces interruptions, on utilise simplement un odomètre lorsqu'il s'agit d'un wagon, puisque la distance parcourue fournie par l'odomètre peut être reportée sur le tracé, connu, de la voie qu'il parcourt.

De façon classique, un odomètre mesure la vitesse de rotation d'une roue et en déduit la vitesse de translation du véhicule et donc la distance parcourue.

Dans le cas présent, il s'agissait de pouvoir équiper les wagons d'un dispositif de localisation sans devoir les modifier. Il était donc exclu de brancher un capteur sur un organe du véhicule porteur.

La présente invention vise tout d'abord à proposer un odomètre qui s'affranchisse de tout branchement de capteur sur un organe du véhicule porteur.

A cet effet, l'invention concerne tout d'abord un odomètre pour véhicule se déplaçant sur une voie comportant des discontinuités situées à intervalles déterminés, caractérisé par le fait qu'il comporte un détecteur de telles discontinuités, commandant des moyens de traitement agencés pour compter le nombre des détections de discontinuité et en déduire, d'après l'intervalle entre discontinuités, des données relatives au déplacement du véhicule.

Ainsi, c'est l'interaction, détectée par le capteur, entre le véhicule et les discontinuités de son environnement, de période connue, qui fournit les informations relatives au déplacement du véhicule. Il n'y a donc pas besoin de surveiller la rotation de roues et l'invention s'applique même à des véhicules sans roues.

Dans le cas de discontinuités de la voie situées à intervalles réguliers, les moyens de traitement peuvent être agencés pour déduire, du nombre des détections de discontinuité, des données représentant une distance parcourue par le véhicule.

Il n'y a qu'une seule période spatiale à prendre en compte et sa multiplication par le nombre de détections donne directement la distance recherchée.

Avantageusement, le capteur est un détecteur de vibrations.

On peut ainsi, très simplement, détecter des vibrations sonores ou des vibrations transmises par la structure du véhicule, provenant par exemple des percussions de roues de véhicule ferroviaire sur des joints entre rails.

L'invention concerne aussi un dispositif de localisation de véhicule se déplaçant sur une voie comportant des discontinuités situées à intervalles déterminés, dispositif comprenant un odomètre selon l'invention, agencé pour commander des moyens radio d'émission des données relatives au déplacement de véhicules.

Avantageusement, il est prévu des moyens de calcul pour calibrer l'odomètre à partir des données de position d'un récepteur GPS et les moyens de calcul sont agencés pour déterminer une position absolue par correction des données de position du récepteur GPS d'après la distance fournie par l'odomètre.

Le dispositif est ainsi entièrement autonome et toute dérive de l'odomètre est corrigée par le récepteur GPS.

L'invention sera mieux comprise à l'aide de la description suivante d'un exemple de réalisation préférée du dispositif de localisation avec l'odomètre de l'invention, en référence au dessin annexé, sur lequel :
- la figure 1 représente schématiquement un wagon sur rails,
- la figure 2 représente schématiquement le dispositif de localisation, et

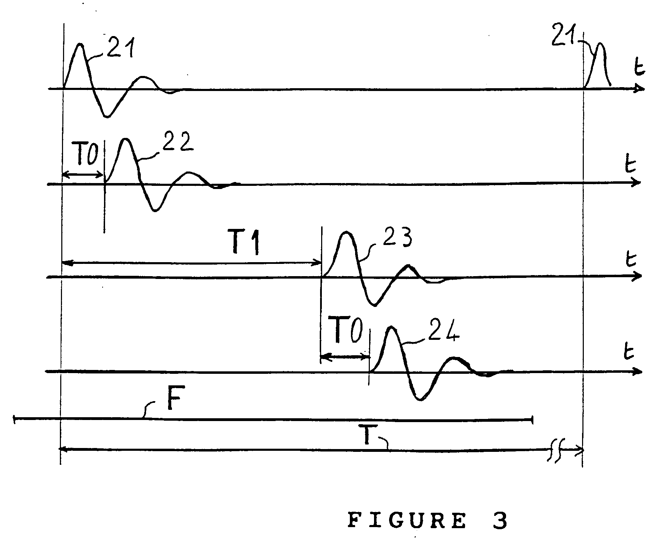

- la figure 3 représente, en fonction du temps t, l'amplitude de signaux de percussion des roues du wagon sur des joints de rails.

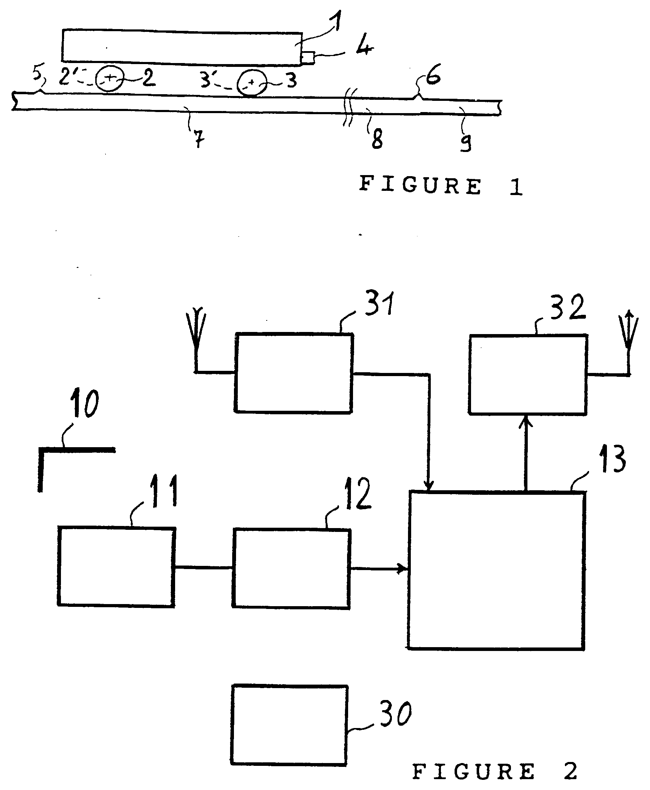

La figure 1, illustrant le concept de l'invention, est une vue latérale schématique d'un wagon 1 pour marchandises en vrac, dont la caisse porte, ici en partie basse et en extrémité, un boîtier 4 comportant le dispositif de localisation. Plus précisément, le boîtier 4 est boulonné en saillie longitudinale à un angle de la caisse, afin de disposer d'une fenêtre angulaire la plus grande possible vers des satellites GPS, c'est-à-dire de l'ouverture entre wagons successifs et de l'ouverture latérale, variable en fonction de la présence d'un autre convoi à côté du wagon considéré. Les rails 7, 8, 9 (représentés à échelle relative dilatée) sur lesquels roule le wagon 1 ont une longueur déterminée et sont ici soudés bout à bout. Le joint de soudure 5, 6 n'est pas parfaitement dans l'alignement de la surface de roulement du rail, si bien que les roues 2, 3 du wagon 1 vont buter dessus ou y tomber partiellement, selon que le joint 5, 6 est en relief ou en creux. De même, une mise bout à bout des rails 7, 8, 9 sans les souder présenterait aussi une discontinuité, d'autant que les traverses s'affaissent légèrement au passage du convoi ferroviaire et que le rail amont sera donc temporairement plus bas que le rail aval.

Les rails 7, 8, 9 étant de longueur connue, et déterminée comme expliqué plus loin, les bruits des roues 2, 3 se répètent à intervalles fixes de distance et permettent donc, par comptage des cycles de bruit, de multiplier le nombre de cycles par la longueur d'un rail 7, 8, 9 pour en déterminer une distance parcourue.

Ce bruit, ou les vibrations, peut être sonore et être simplement capté par un microphone et/ou se propager par des vibrations de la structure du wagon.

La figure 2 illustre schématiquement la structure électrique de l'odomètre, référencé 10 et du dispositif de localisation qui le comporte. L'odomètre comporte un capteur de vibrations 11, ici à élément piézoélectrique, qui, solidaire de la caisse du wagon 1, alimente, en signal de détection, une unité de traitement 13 à travers un filtre 12. En pratique, le filtre 12 et l'unité de traitement 13 sont à base d'un même processeur de traitement de signal (DSP). Une source électrique 30, ici une pile, alimente l'odomètre 10 et l'ensemble du dispositif.

Pour chaque paire latérale de roues du wagon 1, respectivement 2, 3 et 2', 3' (cachées sur la figure 1), le capteur 11 capte des vibrations 21, 23 et 22, 24, ou percussions, successives sur une même discontinuité 5, 6. Pour chaque paire latérale de roues comme 2, 3 ou 2', 3', il s'agit donc d'une paire de séquences vibratoires comme 21, 23 et comme 22, 24, qui s'amortissent, et qui réapparaissent avec un intervalle temporel T proportionnel à la longueur d'un rail 7, 8, 9 et inversement proportionnel à la vitesse de déplacement du wagon 1, qui est donc ainsi mesurable. Les deux séquences (21, 23) d'une paire sont sensiblement semblables, le défaut de géométrie des roues considérées (2, 3) pouvant les faire légèrement différer. L'entr'axe des roues 2, 3 détermine le retard T1 entre le signal 21 (22) et le signal 23 (24), retard T1 qui fournit aussi la vitesse du wagon 1, à partir de la seule constitution (entr'axe) de celui-ci, indépendamment de la longueur des rails 7, 8, 9.

La paire de séquences 21, 23 des deux roues de gauche 2, 3 et la paire de séquences 22, 24 des deux roues de droite 2', 3' se superposent au niveau du capteur 11, avec un décalage temporel éventuel T0 si les joints 6 des deux rails côte à côte sont décalés, l'une en amont de l'autre. De même, les discontinuités 6 des rails de gauche et de droite peuvent être de formes différentes.

L'unité de traitement 13 a pour fonction d'effectuer une détection du motif global de vibrations 21, 22, 23, 24 provenant des roues c'est-à-dire de déterminer sa forme et de la reconnaître ensuite lorsqu'il réapparaît périodiquement. Pour cela, le filtre 12 effectue un préfiltrage passe-bas des signaux vibratoires pour éliminer les signaux à haute fréquence, qui n'ont que peu d'énergie et n'apportent qu'une information limitée. L'unité de traitement 13 dispose ainsi de signaux lissés, plus faciles à traiter.

Pour obtenir une information la plus précise possible, l'unité de traitement 13 effectue une corrélation ou composition entre les quatre signaux vibratoires 21 à 24 pour obtenir un signal somme. A cet effet, l'unité centrale 13 effectue de façon continue une sommation adaptative des quatre signaux 21 à 24, en retardant chacun plus ou moins pour que tous les quatre soient en phase. Il s'agit donc d'un traitement de signal ou filtrage auto-adaptatif, itératif, en réglant le retard et l'amplitude de chacun des quatre signaux, et éventuellement des diverses composantes fréquentielles de ceux-ci, pour obtenir une forme facilement reconnaissable, comme une impulsion unique.

Afin d'éliminer des signaux parasites, comme des bruits d'aiguillage, l'unité de traitement 13 détermine en outre la période de répétition T, d'un motif global 21 à 24 au suivant, et fixe une fenêtre temporelle prévisionnelle F, centrée sur l'instant prévu pour un nouveau motif global de quatre séquences 21 - 24 et de durée suffisante pour les capter entièrement même en cas de variation de vitesse du convoi. Il s'agit donc d'un fonctionnement logique à asservissement de phase et de bande-passante déterminée, qui permet donc de capter les vibrations se produisant avec la phase prévue, c'est-à-dire à l'instant prévisionnel, avec une tolérance. Un dispositif de chien de garde inhibe le fenêtrage ci-dessus en cas de perte de détection des séquences, due par exemple à un chargement de longueurs de rails ou à l'arrêt du convoi. A chaque période T correspond une période spatiale de longueur égale à celle d'un rail 7, 8, 9, qui est connue. De ce fait, la vitesse de déplacement du wagon 1, déterminant la période T, n'influe pas sur le résultat de la mesure de distance parcourue.

Dans cet exemple, les rails 7, 8, 9 sont supposés être tous de même longueur dans une région et on effectue un recalibrage en cas de changement confirmé de longueur de rails 7, 8, 9. Cependant, il aurait pu être prévu de conserver en mémoire une pluralité ou échelle des longueurs déterminées des divers types de rails 7, 8, 9, pour déterminer en parallèle une pluralité ou échelle correspondante de diverses périodes T prévisionnelles, chacune proportionnelle à la longueur du type de rail 7, 8, 9 considéré. Comme la vitesse du wagon 1 ne peut varier brutalement, les fenêtres F terminant les périodes T ci-dessus occupent donc des positions temporelles toujours valables. Celle des périodes T prévisionnelles que permet effectivement la détection d'un nouveau motif, période T qui est ainsi validée, indique, par changement dans l'échelle, la taille du rail 7, 8, 9 qui vient d'être parcouru et, dans le tableau, est celle dont la valeur est la plus proche du produit de la longueur du rail 7, 8, 9 précédent multipliée par le rapport entre cette dernière période T validée et celle qui la précède.

L'odomètre 10, de fourniture de position relative par rapport à une position de départ, est complété par un dispositif 31 de fourniture de la position absolue. Il s'agit ici d'un récepteur GPS, relié en sortie à l'unité de traitement 13, qui, dans cet exemple, sert donc aussi au niveau système, comme unité centrale de calcul, gérant le dispositif.

Le récepteur 31 est activé périodiquement pour l'unité de traitement 13 pour lui fournir la position instantanée du wagon 1. L'unité de traitement 13 émet cycliquement la dernière position acquise, ici avec une période de répétition plus élevée qu'en réception GPS, afin de ménager l'alimentation par la pile 30. Un émetteur radio 32, comportant des circuits du genre terminal de radiotéléphonie cellulaire GSM commandés par l'unité de traitement ou calcul 13, émet à cet effet un message codé vers un Centre de suivi de wagons comme le wagon 1.

Ainsi, le récepteur GPS 31 fournit la position absolue recherchée. En outre, il permet de déterminer la longueur des rails 7, 8, 9, qui peut varier d'une région à l'autre. Pour cela, l'odomètre 10 détermine et compte les passages aux discontinuités 5, 6 entre rails 7, 8, 9 sur une certaine durée d'initialisation, limitée par deux réceptions GPS. L'écart des deux positions correspondantes fournit une distance qui, rapportée au nombre de détections, fournit la mesure de la longueur d'un rail 7, 8, 9. Pour préciser la mesure, une interpolation est ici effectuée pour déterminer deux positions GPS corrigées, occupant précisément la même position relative par rapport aux deux motifs globaux 21 - 24 extrêmes dans la période limitée par les deux réceptions GPS.

La longueur du rail 7, 8, 9 ainsi déterminé est mise en mémoire dans l'unité de traitement 13 et sert ainsi à calibrer l'odomètre 10. Un nouveau calibrage intervient chaque fois que la détection du motif global 21 - 24 est perdue sur plusieurs cycles T successifs, car cela peut provenir d'un changement de longueur de rail 7, 8, 9.

En dehors des périodes de calibrage, pour lesquelles la position GPS est déterminée à rythme soutenu, ici toutes les secondes, le rythme d'acquisition de position GPS est ralenti et celui d'émission de position est, comme indiqué, encore plus faible, par exemple toutes les heures.

En cas de perte de la réception GPS, l'odomètre 10 prend le relais. Le déplacement qu'il définit est alors utilisé pour déterminer une correction de la dernière position GPS relevée. Le Centre de suivi peut ainsi, en partant de la dernière position GPS reçue (32), relative à un instant donné précisé ici dans le message correspondant, reporter, sur une carte de la voie ferrée considérée, la longueur curviligne du déplacement du wagon 1 entre un instant actuel et un instant précédent déterminé. Ce dernier correspond à une position GPS connue directement ou indirectement, c'est-à-dire à l'instant de transmission de la dernière position GPS, éventuellement de toute autre antérieure, ou de toute position GPS obtenue par interpolation. Le sens de parcours de la voie est obtenu d'après deux relevés de position GPS. Ces traitements peuvent aussi être effectués par l'unité centrale 13.

En cas de simple baisse du niveau de puissance des signaux GPS reçus, le rythme d'activation du récepteur GPS 31 est ici accru, par l'unité de traitement 13, informée à cet effet par le récepteur 31, afin de disposer d'une position GPS récente en cas de perte ultérieure de toute réception. Cette dernière position est alors envoyée vers le Centre de suivi et sert de base pour le report de la distance fournie ensuite par l'odomètre 10. Ainsi, le récepteur GPS 31 est activé à un rythme variant en sens inverse du niveau de réception des signaux GPS. L'émetteur 32 peut être activé de même.

On conçoit que la présence du récepteur GPS 31 n'est pas nécessaire, la distance fournie par l'odomètre 10 pouvant être référencée à une position connue d'une gare de départ. Le récepteur GPS 31 permet cependant de corriger l'erreur cumulée de l'odomètre 10 et, en outre, rend autonome le dispositif pour son initialisation de position.

On remarquera que la mesure de distance, peut, dans d'autres exemples, être effectuée à partir de signaux périodiques liés à la présence d'une suite régulière d'éléments de voie détectables. Selon leur nature, le capteur concerné peut varier puisqu'on peut envisager par exemple une détection vibratoire, à travers l'air ou la caisse du véhicule, optique ou encore magnétique. On peut ainsi par exemple compter des traverses.

Afin de prévenir le Centre de suivi de la nécessité de changer la pile 30 lorsqu'elle est quasiment épuisée, et de le faire ni trop tôt, pour éviter une intervention inutile, ni trop tard, avec le risque de ne pouvoir émettre, l'unité de traitement 13 détermine la perte de capacité de la pile 30, c'est-à-dire le nombre d'ampères-heures (A-h). Cette perte de capacité pourrait être transmise directement au Centre de suivi, pour qu'il détermine la capacité restante. Ici, l'unité de traitement 13 calcule la décharge de la pile 30 et, d'après des données de capacité ou autonomie initiale en mémoire, c'est elle qui détermine l'autonomie subsistante.

Pour cela, l'unité de traitement 13 est reliée en entrée à un circuit ampèremétrique, non représenté, en série avec la pile 30, et à un capteur, non représenté, de température ambiante, et donc de celle de la pile 30. Les données de courant de décharge instantané et les données de température correspondantes permettent de calculer la décharge, qui varie comme l'intégrale du courant instantané de décharge en fonction du temps t, la température ambiante venant moduler la valeur instantanée des ampère-heures de décharge. Une baisse de température accentue en effet la décharge. Le courant de décharge est donc la variable et la température est un paramètre de correction.

## Revendications

1. Odomètre pour véhicule se déplaçant sur une voie comportant des discontinuités (5, 6) situées à intervalles déterminés, caractérisé par le fait qu'il comporte un détecteur (11) de telles discontinuités (5, 6), commandant des moyens de traitement (12, 13) agencés pour compter le nombre des détections de discontinuité et en déduire, d'après l'intervalle entre discontinuités (5, 6), des données relatives au déplacement du véhicule.

2. Odomètre selon la revendication 1, dans lequel, les discontinuités (5, 6) de la voie étant situées à intervalles réguliers, les moyens de traitement (12, 13) sont agencés pour déduire, du nombre des détections de discontinuité, des données représentant une distance parcourue par le véhicule.

3. Odomètre selon la revendication 1 et 2, dans lequel le détecteur (11) est un détecteur de vibrations.

4. Odomètre selon la revendication 3, dans lequel le détecteur (11) comporte un élément à effet piézoélectrique.

5. Odomètre selon l'une des revendications 2 à 4, dans lequel les moyens de traitement (12, 13) comportent un filtre (12) de mise en forme de signaux impulsionnels, alimentant un circuit (13) de reconnaissance des signaux impulsionnels.

6. Odomètre selon la revendication 5, dans lequel le circuit de reconnaissance (13) est auto-adaptatif.

7. Odomètre selon l'une des revendications 1 à 6, dans lequel les moyens de traitement (13) sont agencés pour déterminer une fenêtre temporelle prévisionnelle (F) pour une future détection de discontinuité (5, 6).

8. Dispositif de localisation de véhicule se déplaçant sur une voie comportant des discontinuités situées à intervalles déterminés, dispositif comprenant un odomètre (10) selon la revendication 1 agencé pour commander des moyens radio (32) d'émission des données relatives au déplacement du véhicule.

9. Dispositif selon la revendication 8, dans lequel il est prévu des moyens de calcul (13) pour calibrer l'odomètre (10) à partir de données de position d'un récepteur GPS (31).

10. Dispositif selon la revendication 9, dans lequel les moyens de calcul (13) sont agencés pour lancer une phase de calibrage en cas de perte de détection des discontinuités (5, 6).

11. Dispositif selon l'une des revendications 9 et 10, dans lequel les moyens de calcul (13) sont agencés pour activer le récepteur GPS (31) à un rythme variant en sens inverse du niveau de réception de signaux GPS.

12. Dispositif selon l'une des revendications 9 à 11, dans lequel les moyens de calcul (13) sont agencés pour déterminer une position absolue par correction des données de position du récepteur GPS (31) d'après la distance fournie par l'odomètre (10).

13. Dispositif selon l'une des revendications 8 à 12, dans lequel les moyens de calcul (13) sont agencés pour déterminer l'autonomie restante d'une source d'énergie électrique (30) d'alimentation du dispositif, à partir de données d'autonomie initiale, par intégration de données de courant de décharge instantané de la source (30), fournies par un circuit ampèremétrique, et de données de température provenant d'un capteur de température.
